# EUROPEAN PATENT APPLICATION

(11) **EP 2 175 117 A1**
(43) Date of publication of application: **14.04.2010**
(21) Application number: 09012345.6
(22) Date of filing: 29.09.2009
(51) Int. Cl.: F02B 27/02

(54) **Intake system for internal combustion engine**

(30) Priority: 08.10.2008 JP 2008261620; 06.04.2009 JP 2009092303; 17.04.2009 JP 2009101225
(71) Applicant: Aisin Seiki Kabushiki Kaisha, Aichi-ken 448-8650 (JP)
(72) Inventor: Sakagami, Eiji, Kariya-shi Aichi-ken 448-8659 (JP); Senda, Tomohisa, Kariya-shi Aichi-ken 448-8659 (JP)
(74) Representative: Kramer - Barske - Schmidtchen

(57) **Abstract**

An intake system for an internal combustion engine, includes a rotary valve including a casing (1) provided with a first port (11), a second port (12) and an outlet port (13), and a rotatable valve member (2) accommodated in the casing (1) and rotated by an actuator, a first intake passage (3) fluidically connecting a surge tank (6) and the first port (11), a second intake passage (4) fluidically connecting the surge tank (6) and the second port (12) and a third intake passage (5) fluidically connecting a cylinder and the outlet port (13), wherein a first state where the outlet port (13) is throttled and at least one of the first port (11) and the second port (12) is opened, or a second state where the outlet port (13), and at least one of the first port (11) and the second port (12) are opened, is selectively established.

## Description

### FIELD OF THE INVENTION

The present invention relates to an intake system for an internal combustion engine.

### BACKGROUND

A known intake system disclosed in JP62-7923A (a first Patent Document) includes a first intake passage of a variable length for connecting an intake port of an engine and a surge tank, and a second intake passage, whose cross-sectional area is smaller than that of the first intake passage, for connecting another intake port of the engine and the surge tank to allow full-time flow connection. The first intake passage is constituted by a first branch passage and a second branch passage each establishing flow connection between the intake port of the engine and the surge tank. Length of the first branch passage is set to be longer than that of the second branch passage. A valve chamber, where the first branch passage and the second branch passage merge with each other, is provided with a valve body. The first branch passage and the second branch passage are opened or closed by rotation of the valve body, and thus the length of the first intake passage is changed, or the first intake passage is opened or closed.

According to the intake system of the first Patent Document, when the engine is running in a low load condition, only the second intake passage is opened to increase a flow rate of the intake air and then to promote fuel atomization, thereby improving combustion characteristics. When the engine is running at a low speed in a high load condition, the first branch passage and the second intake passage are open. In this condition, charging efficiency of the intake air is increased by an inertia supercharging effect of the first branch passage having a longer line length and by a lower line resistance achieved by increased cross-sectional area of the passages, and thus engine output is improved. When the engine is running at a high speed in the high load condition, the second branch passage and the second intake passage are open. In this condition, the charging efficiency of the intake air is increased by the inertia supercharging effect of the second branch passage having a shorter line length and by the lower line resistance achieved by the increased cross-sectional area of the passages. Further, formation of a swirl is promoted because the second intake passage is always open, which increases an air-fuel ratio, thereby constantly improving the combustion characteristics.

Another known intake system disclosed in JP2007-9795A (a second Patent Document) is provided with a rotary valve having a cylindrical shape. The rotary valve is provided so as to extend across all the intake passages of a multi-cylinder combustion engine and rotates about a rotation axis extending in a direction of arrangement of cylinders. The rotary valve is provided with through passages each penetrating an outer periphery of the rotary valve in a direction perpendicular to the rotation axis, and supporting members defining both sides of the through passages. The rotary valve is also provided with valve pieces integrally formed on the outer periphery of the rotary valve for opening or closing the intake passages as the rotary valve rotates about the rotation axis. The rotary valve is further provided with reinforcing bridges each facing the corresponding valve piece. Each of the reinforcing bridges is structured so that a width thereof is smaller than a width of the valve piece in a direction perpendicular to an intake air flow when the valve piece is in a position to fully open the intake passage.

According to the intake system of the second Patent Document, when the engine is running at a low speed, the intake passage is throttled by the valve piece to increase a flow rate of intake air so that the intake air and fuel are reliably mixed with each other. When the engine is running at a high speed, the intake passage is fully opened to increase a cross-sectional area of the intake passage, thereby supplying a large amount of intake air. The reinforcing bridges increase rigidity around the rotation axis of the rotary valve and prevent deformation of the rotary valve, thereby allowing a smooth rotation of the rotary valve. Further, resistance of the intake air passage is reduced because the width of the reinforcing bridge is set to be small.

The inertia supercharging utilizes a pressure wave generated in an intake passage to increase the amount of intake air charged into a combustion chamber of a cylinder of an internal combustion engine. In order to obtain an ideal inertia supercharging effect, it is considered that a length and a diameter of the intake passage need to be appropriately set according to a rotation speed of the internal combustion engine.

For example, where the rotation speed of the internal combustion engine (a speed of a reciprocating piston in the cylinder) is *a*, the length and the diameter of the intake passage in which the inertia supercharging effect is obtained is *la* and *ra*, respectively. Where the rotation speed of the internal combustion is *b*, the length and the diameter of the intake passage in which the inertia supercharging effect is obtained is *lb* and *rb*, respectively. Here, *la* < *lb* if *a* > *b* is satisfied. When the rotation speed is *a*, *ra* is large enough to ensure a necessary amount of intake air, and at the same time, small enough to obtain the inertia supercharging effect. Similarly, when the rotation speed is *b*, *rb* is large enough to ensure the necessary amount of intake air, and at the same time, small enough to obtain the inertia supercharging effect. The larger an amount of intake air is needed, the shorter the length of the intake passage should be set, so that line resistance of the intake passage is decreased, and thus the larger amount of intake air is supplied to the combustion chamber of the cylinder of the internal combustion engine efficiently.

However, according to the first Patent Document, because the second intake passage is always open, the inertia supercharging effect that is obtained upon opening of the first intake passage may be diminished. To solve this problem, for example, a TCV (a tumble control valve) needs to be additionally provided for opening or closing the second intake passage. In addition, because the cross-sectional area of the second intake passage is small, carbon or other materials may clog in the second intake passage, and thus the fuel atomization or the formation of the swirl may be inhibited.

According to the second Patent Document, the cross-sectional area of the intake passage is increased or decreased by the rotation of the rotary valve, thereby meeting smaller varieties of running conditions of the engine. Therefore, no improvement may be obtained in a combustion efficiency or engine output in some running conditions of the engine.

A need thus exists for an internal combustion engine, which provides an appropriate control of intake air according to running conditions of the internal combustion, thereby improving a combustion efficiency and engine output efficiently and reliably.

### SUMMARY OF THE INVENTION

According to an aspect of the present invention, an intake system for an internal combustion engine includes a rotary valve including a casing having a hollow shape and provided with a first port, a second port and an outlet port, and a rotatable valve member having a valve portion and accommodated in the casing for being rotated in the casing by an actuator, a first intake passage fluidically connecting a surge tank and the first port, a second intake passage fluidically connecting the surge tank and the second port and being longer than the first intake passage, and a third intake passage fluidically connecting a cylinder of the combustion engine and the outlet port, wherein the rotatable valve member is rotated so that a first state in which the valve portion throttles the outlet port and opens at least one of the first port and the second port, or a second state in which the valve portion opens the outlet port, and at least one of the first port and the second port, is selectively established.

Generally, when the internal combustion engine is idling, a small amount of intake air is required and a flow rate of an intake air is low. Therefore, in order to improve a combustion efficiency at idling, an air-fuel ratio needs to be increased by promoting atomization of fuel or the generation of a tumble flow. In order to improve the engine output at the low, high and medium engine speed, the charging efficiency of the intake air needs to be further improved by, for example, exploiting the charging efficiency of the intake air an inertia supercharging effect, or shortening a length of the intake passage for decreasing a pressure loss or a line resistance.

Due to the above-described structure of the present invention, the intake air system is provided with the rotary valve including the rotatable valve member, and the casing having thereon the first port, the second port and the third port. The intake air system is also provided with the first intake passage, the second intake passage being longer than the first intake passage, and the third intake passage. According to the intake air system, the rotatable valve member is rotated so that the first state in which the outlet port is throttled, and at least one of the first port and the second port is opened by the valve portion, or the second state in which at least one of the first port and the second port, and the outlet port are opened by the valve portion, is selectively established.

When the internal combustion engine is idling, the first state is established and the outlet port is throttled, thereby increasing the flow rate of the intake air, which promotes the atomization of the fuel and the generation of the tumble flow. Consequently, the air-fuel ratio is increased, and thus the combustion efficiency of the internal combustion engine improves. Further, foreign materials including carbon or other materials, which tend to adhere to and around the valve portion and the outlet port, are removed by a movement of the valve portion, and thus no clogging occurs on an intake path. Consequently, an ideal control on the intake air is maintained.

When the internal combustion engine is running at a low speed, the second state is established, and the valve portion is moved to a position to open the outlet port, and at least one of the first port and the second port. At the low engine speed, the small amount of intake air is required, and a movement speed of the piston is slow, and thus an intake efficiency is relatively high. Consequently, sufficient charging efficiency of the intake air is ensure by opening the outlet port, and either one of the first port and the second port. Because only either one of the first port and the second port may-be open, the intake system for the internal combustion engine of high practicality When the internal combustion engine is running at a medium speed, the second state is established, and the valve portion is moved to a position to close only the first port. At this time, the intake air is supplied only from the second intake passage having a longer line length, and thus the inertia supercharging effect is enhanced, thereby improving the output of the internal combustion engine. The length and a diameter of the second intake passage are set according to the number of revolution of the internal combustion engine when it is running at the medium rotation speed so that the inertia supercharging effect is maximized.

When the internal combustion engine is running at a high speed, the valve portion is moved to a position to open the first port, the second port and the outlet port, that is, the second state is established. At this time, the intake air is supplied mainly from the first intake passage, whose line length is short, and supplementarily from the second intake passage. Because the length of the first intake passage is short, the pressure loss and the line resistance are reduced, and thus a large amount of intake air is supplied, thereby enhancing the charging efficiency of the intake air and improving the engine output.

As described above, the ideal control that meets a running condition of the internal combustion engine is achieved with one rotary valve, which allows the reduction in a size of the intake system, that is, a required space for installation of the intake system. Further, reduction in weight of the intake system is achieved. Still further, the intake system performing the ideal control is provided at a low cost.

According to another aspect of the present invention, the rotatable valve member is rotated so that the valve portion moves from a first position of the first state to a second position of the second state in a direction of an order of an arrangement of the outlet port, the first port and the second port. The first position is a position in which the valve portion opens a part of the outlet port which is close to the second port and closes a remaining part of the outlet port which is close to the first port. The second position is a position in which the valve portion closes only the first port.

Due to the above-described structure, a movement range of the valve portion includes each position of the valve portion that meets the engine speed, and thus the ideal control on the intake air is achieved with the minimum movement of the valve portion. This reduces a rotation range of the valve portion of the rotary valve, thereby reducing wear of the rotary valve and other components as well as degradation of the actuator during service. Operational reliability of the intake system 100 is also improved. Further, decrease in the amount of intake air is prevented and constant intake efficiency is maintained because the second port is always open.

According to a further aspect of the present invention, the rotatable valve member is rotated so that the valve portion is in a third position of the second state. The third position is a position in which the valve portion opens the first port, the second port and the outlet port. The third position is located between the first position and the second position.

Consequently, the above-described ideal control is reliably performed by allowing the valve portion to be in the third position when the internal combustion engine is running at the low speed and at the high speed.

According to a still further aspect of the present invention, the rotatable valve member includes at least one rib facing the valve portion.

Due to the above-described structure, the rotatable valve member includes at least one rib arranged to radially face the valve portion, which increases a rigidity around a rotation axis of the rotatable valve member. Further, thermal expansion of the valve portion is balanced out by thermal expansion of the rib, and thus deformation of the rotatable valve member is reduced. Consequently, a smooth rotation of the rotatable valve member is maintained, thereby improving the operational reliability of the intake system.

According to a still further aspect of the present invention, the casing is provided with a first inner circumferential wall between the first port and the outlet port, a second inner circumferential wall between the first port and the second port, and a third inner circumferential wall between the second port and the outlet port. The rotatable valve member includes a first rib and a second rib each facing the valve portion, so that the first rib is positioned in the first port and the second rib is positioned to face the third inner circumferential wall in the first state, and the first rib is positioned to face the second inner circumferential wall or the third inner circumferential wall and the second rib is positioned to face the third inner circumferential wall or the first inner circumferential wall in the second state.

According to a still further aspect of the present invention, the valve portion includes a base along which the intake air flows from at least one of the first port and the second port to the outlet port, and a reinforcing member protruding from the base in a radially outward direction of the rotatable valve member and being out of contact with the casing.

### BRIEF DESCRIPTION OF THE DRAWINGS

The foregoing and additional features and characteristics of the present invention will become more apparent from the following detailed description considered with the reference to the accompanying drawings, wherein:

Fig. 1 is a cross-sectional view of an intake system and a surge tank;

Fig. 2 is a perspective view of a rotatable valve member;

Fig. 3 is an enlarged cross-sectional view of the intake system;

Fig. 4 is a diagram explaining a cross-sectional view of the intake system when a valve is in a first position;

Fig. 5 is a diagram explaining the cross-sectional view of the intake system when the valve is in a third position; and

Fig. 6 is a diagram explaining the cross-sectional view of the intake system when the valve is in a second position.

### DETAILED DESCRIPTION

An embodiment of an intake system for an internal combustion engine will be explained with reference to the illustrations as follows. In the embodiment, an application of the intake system to a vehicle mounted with a four cylinder-engine is explained as an example.

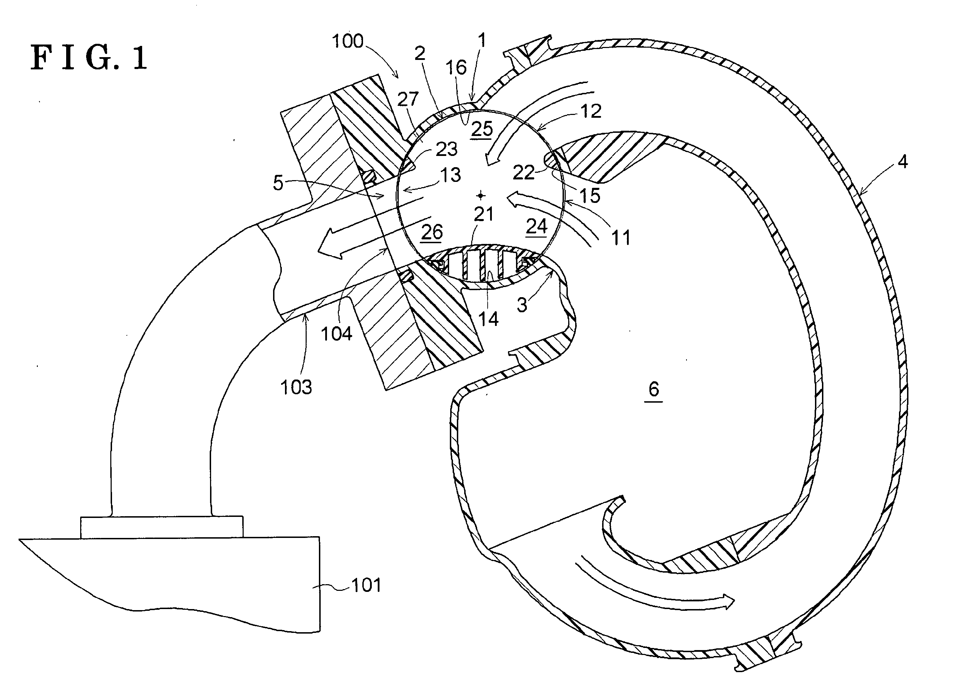

As shown in Fig. 1, the intake system for the internal combustion engine (hereinafter referred to as an intake system 100) of the embodiment includes a rotary valve, a first intake passage 3, a second intake passage 4, and a third intake passage 5. The rotary valve includes a casing 1 and a rotatable valve member 2. The intake system 100 is integrally formed with a surge tank 6.

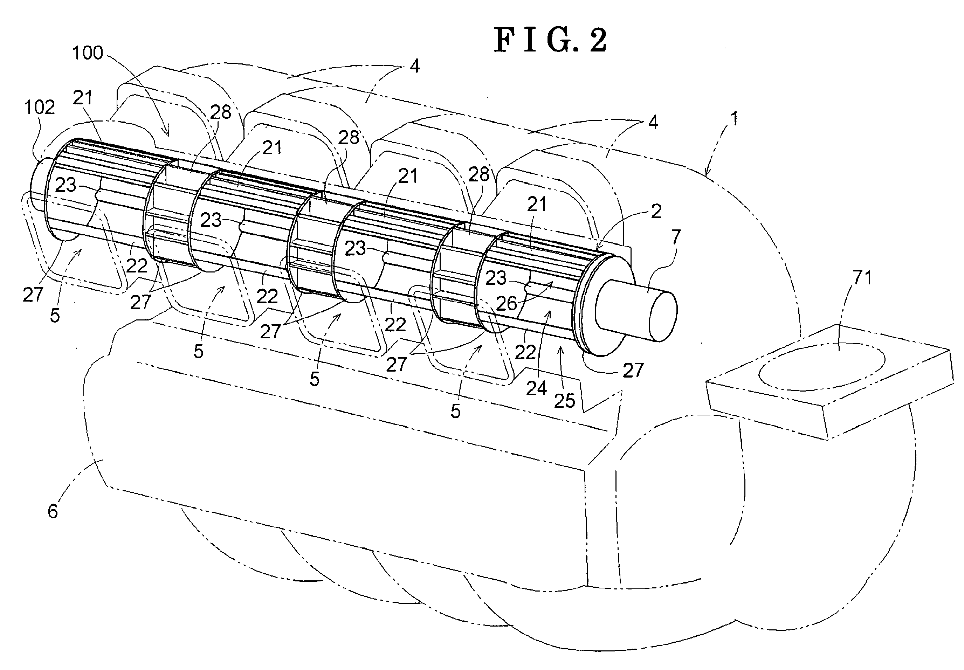

A throttle valve is provided in an intake path leading to a combustion chamber of a cylinder 101 (hereinafter referred to as the intake path), at upstream of the surge tank 6. The amount of intake air flowing into the surge tank 6 via an inlet port 71 (refer to Fig. 2) is controlled by opening or closing the throttle valve. Because it is more effective to control the intake air in a position closer to the combustion chamber, the intake system 100 is positioned downstream of the surge tank 6, that is, the intake system 100 is positioned so that the intake air is controlled after being divided into four flows.

The intake path positioned downstream of the surge tank 6 is constituted by the third intake passage 5, and either one of the first intake passage 3 and the second intake passage 4. The surge tank 6 is provided with the four sets of the first intake passage 3, the second intake passage 4 and the third intake passage 5, that is, the four intake paths. The rotary valve is provided so as to extend across the four intake paths for performing a collective control of all the four intake paths. Because the four intake paths have a similar structure, description of the similar structure is omitted and same reference numerals designate the same or corresponding portions.

As shown in Fig. 1, the first intake passage 3 fluidically connects the surge tank 6 and the casing 1. The first intake passage 3 is formed so as to extend from an upper portion of the surge tank 6, and penetrate a wall between the casing 1 and the surge tank 6, thereby connecting the surge tank 6 with a first port 11 that will be detailed below. The four first intake passages 3, 3, 3, 3 are parallelly aligned to one another in a direction of arrangement of the four cylinders 101, 101, 101, 101 (a direction perpendicular to the paper surface on which Fig. 1 is drawn).

As shown in Fig. 1, the second intake passage 4 fluidically connects the surge tank 6 and the casing 1. The second intake passage 4 is formed so as to extend from a lower portion of the surge tank 6 and substantially surround an outer surface of the surge 6, thereby connecting the surge tank 6 with a second port 12 that will be detailed below. As shown in Fig. 2, the four second intake passages 4, 4, 4, 4 are parallelly aligned to one another in the direction of the arrangement of the four cylinders 101, 101, 101, 101.

As shown in Fig. 1, the second intake passage 4 is longer than the first intake passage 3. A length and a diameter of the second intake passage 4 are set so that an inertia supercharging effect is maximized at a medium engine speed. A cross-sectional area of the first intake passage 3 is larger than that of the second intake passage 4.

As shown in Fig. 1, the third intake passage 5 fluidically connects the combustion chamber and the casing 1. The third intake passage 4 is formed so as to extend from the casing 1 toward the combustion chamber, thereby connecting an intake port 104 of an intake passage 103 leading to the combustion chamber with an outlet port 13 that will be detailed below. The intake passage 103 curves and extends to the cylinder 101, which is located below the surge tank 6. As shown in Fig. 2, the four third intake passages 5, 5, 5, 5 are parallelly aligned to one another in the direction of the arrangement of the four cylinders 101, 101, 101, 101. A cross-sectional area of the third intake passage 5 is equal to or larger than that of the second intake passage 4. That is, a diameter of the third intake passage 5 is equal to or larger than that of the second intake passage 4.

According to the structure of the intake system 100 of this embodiment, the first intake passage 3 is shorter and has the larger cross-sectional area compared to the second intake passage 4, and thus a line resistance and a pressure drop of the first intake passage 3 are smaller. When the first intake passage 3 and the second intake passage 4 are open, the intake air is supplied mainly from the first intake passage 3 having the smaller line resistance and supplementarily from the second intake passage 4, allowing a large amount of intake air to be supplied. As described above, the diameter of the third intake passage 5 is equal to or larger than that of the second intake passage 4 so as to allow the large amount of intake air to flow. In addition, by setting the intake system 100 to open only the second intake passage 4 at the medium engine speed, the inertia supercharging effect is enhanced and a charging efficiency of the intake air is thereby improved.

As shown in Fig. 1, the rotary valve includes the casing 1 having a cylindrical hollow shape and the rotatable valve member 2 accommodated in the casing 1. The rotary valve is driven by an actuator 7 (refer to Fig. 2) to rotate along an internal surface of the casing 1, thereby opening or closing the first intake passage 3 and the third intake passage 5.

The casing 1 is integrally provided on the upper portion of the surge tank 6. A cylindrical axis of the casing 1 extends in the direction of the alignment of the cylinders 101, 101, 101, 101. Four sets of the first port 11, the second port 12, and the outlet port 13 are formed on the casing 1.

The intake air flows from the surge tank 6 through the first intake passage 3 into the casing 1 via the first port 11. The first port 11 is open toward the surge tank 6 so as to allow a smooth fluidical connection of the first port 11 and the first intake passage 3. The intake air flows from the surge tank 6 through the second intake passage 4 into the casing 1 via the second, port 12.
The second port 12 is open to the outer periphery of the surge tank 6. The intake air also flows from the casing 1 through the third intake passage 5 into the combustion chamber via the outlet port 13. The outlet port 13 is open to the cylinder 101.

The first port 11, the second port 12 and the outlet port 13 are shaped so as to be smoothly connected to the first intake passage 3, the second intake passage 4 and the third intake passage 5, respectively. An opening area of the first port 11 is larger than that of the second port 12. An opening area of the outlet port 13 is equal to or larger than that of the second port 12. That is, an inner diameter of the outlet port 13 is equal to or larger than that of the second port 12.

For a smooth flow of the intake air, the first port 11, the second port 12 and the outlet port 13 are structured so that radial centers of the three ports are located on a plane perpendicular to a rotation axis of the rotary valve (hereinafter referred to as the rotation axis). In a direction of the rotation axis, a distance between a unit of the first port 11, the second port 12 and the outlet port 13, and the adjacent unit of the first port 11, the second port 12 and the outlet port 13 is equal to a distance between the corresponding unit of the first intake passage 3, the second intake passage 4 and the third intake passage 5 between the adjacent unit of the first intake passage 3, the second intake passage 4 and the third intake passage 5 (a spacing between the parallelly aligned units). There are four of the units each including the first intake passage 3, the second intake passage 4 and the third intake passage 5.

As shown in Fig. 1, the first port 11, the second port 12 and the outlet port 13 are formed so that the radial centers of the three ports are located on the same plane, allowing appropriate distances between the adjacent ports. If, for example, the first port 11 or the second port 12 is positioned closer to the outlet port 13, the flow of the intake air may curve at an acute angle in the casing 1, thereby decreasing a flow rate. If the first port 11 and the second port 12 are positioned excessively close to each other, and the intake air is supplied from the both ports at the same time, an air turbulence may occur around the first port 11 and the second port 12, thereby decreasing the flow rate.

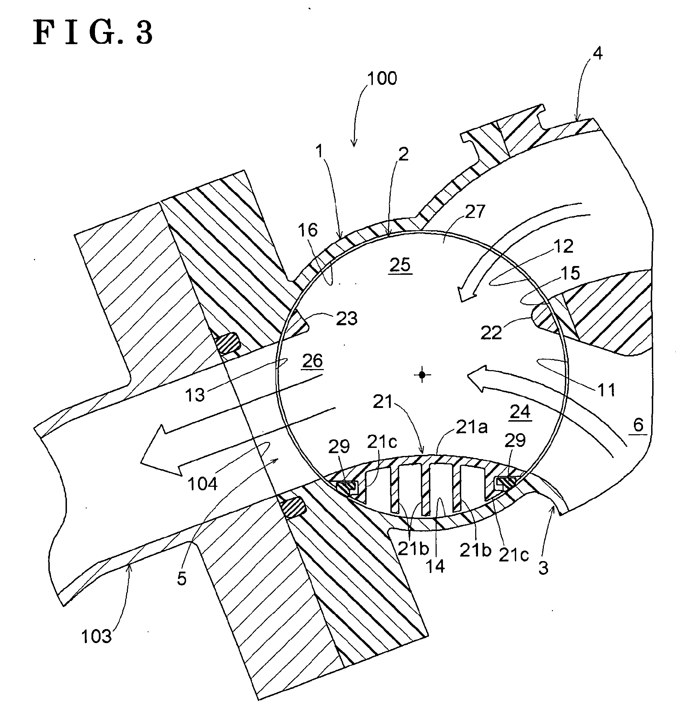

As shown in Fig. 3, the arrangement of three ports provides a first inner wall 14 between the first port 11 and the outlet port 13, a second inner wall 15 between the first port 11 and the second port 12, and a third inner wall 16 between the second port 12 and the outlet port 13.

As shown in Figs. 2 and 3, the rotatable valve member 2 has a cylindrical shape that is slightly smaller than an internal shape of the casing 1. The rotatable valve member 2 is accommodated in the casing 1 and is driven by the actuator 7 to rotate along the internal surface of the casing 1. That is, the rotatable valve member 2 is rotated about the rotation axis extending in the direction of the alignment of the cylinders 101, 101, 101, 101. As shown in Fig. 2, the rotatable valve member 2 is constituted by the four units connected with each other by connecting portions 28, 28, 28. Each unit includes a valve portion 21, ribs 22, 23 and two partitions 27, 27. The ribs 22, 23 serve as a first rib 22 and a second rib 23, respectively. The partitions 27, 27 have disc shapes and face each other in a direction of the rotation axis. The valve portion 21, the first rib 22 and the second rib 23 extend in the direction of the rotation axis from one partition 27 to the other partition 27, so that the first rib 22 and the second rib 23 face the valve portion 21.

The rotatable valve member 2 is supported by the casing 1 via two bearings. One bearing is provided at one side of the rotation axis, where the actuator 7 is located, and the other bearing is provided at the other side of the rotation axis, where an angle sensor 102 is located, One end of the rotation axis of the rotatable valve member 2 is connected to the actuator 7 so that the rotatable valve member 2 is driven by the actuator 7 to rotate. The other end of the rotation axis of the rotatable valve member 2 is connected to the angle sensor 102 and the rotatable valve member 2 is monitored to be in a rotational position appropriate for a running condition of the engine.

An electric motor is, for example, applied as the actuator 7, and runs forward and backward. As shown in Fig. 2, the actuator 7 is provided outside the casing 1 and drives the rotatable valve member 2 to rotate.

As shown in Fig. 3, a space defined by the two partitions 27, 27 each located on a respective end of the unit is divided into three air flow portions: a first air flow portion 24 provided between the valve portion 21 and the first rib 22, a second air flow portion 25 provided between the first rib 22 and the second rib 23, and a third air flow portion 26 provided between the second rib 23 and the valve portion 21. The first air flow portion 24, the second air flow portion 25 and the third air flow portion 26 are merged with each other inside the rotatable valve member 2, and the intake air is in free communication among the three air flow portions. A distance between the two partitions 27, 27 each located on the respective end of the unit is slightly larger than an opening width of the outlet port 13 in the direction of the rotation axis, thereby allowing the smooth flow of the intake air.

As shown in Fig. 2, the connecting portion 28 rigidly connects the two units in the direction of the rotation axis. For reducing weight of the rotational valve member 2, the connecting portion 28 is constituted by multiple plates extending radially from the rotation axis. The number of the plates and a thickness of each plate are set so that no torsional deformation is caused by a rotation of the rotational valve member 2. The units are connected with each other in a manner that the valves 21, 21, 21, 21, the first ribs 22, 22, 22, 22 and the second ribs, 23, 23, 23, 23 are in same phases, respectively.

To prevent communication of the intake air between the two adjacent units, that is, to prevent the intake air in one intake path from leaking to the adjacent intake path, an elastic sealing member 29 (refer to Fig. 3) is fixedly attached to outer peripheries of the partitions 27, 27 each located on the respective end of the.unit, so as to be in close contact with an inner periphery of the casing 1. The elastic sealing member 29 is constituted by two ring members each provided on the respective outer peripheries of the partitions 27, 27, and two ladder portions (portions designated by numerals 29, 29 in Fig. 3) connecting the two ring members in the direction of the rotation axis. Because the ring members are in close contact with the inner periphery of the casing 1, leakage of the intake air between adjacent intake paths is prevented, thereby an accurate control on the intake air is maintained.

As shown in Fig. 3, the valve portion 21 includes a base 21a, a reinforcing member 21b and sealing member attaching portions 21c, 21c. The base 21a, the reinforcing member 21b and the seating member attaching portions 21c, 21c are provided between the two partitions 27, 27 each located on the respective ends of the unit (refer to Fig. 2). The first rib 22 and the second rib 23 are also provided between the two partitions 27, 27, and thus a rigidity around the rotation axis, that is, a torsional rigidity of the rotational valve member 2, is increased, thereby reducing the torsional deformation of the rotatable valve member 2 that may be caused by the rotation. Practically, the base 21a opens or closes the first port 11 and the outlet port 13, and guides the intake air appropriately.

As shown in Fig. 3, the ladder portions of the elastic sealing member 29 are engaged with the two sealing member attaching portions 21c, 21 c allowing minute clearances therebetween, and thus the elastic sealing member 29 is fixedly attached to the valve portion 21. The ladder portions are positioned close to the inner periphery of the casing 1 leaving minute clearances, so that unnecessary flow of the intake air between the valve portion 21 and the inner periphery of the casing 1 is prevented.

An inner surface of the base 21a extending in a radial direction of the rotatable valve member 2 is smoothly curved so that the first intake passage 3 and the third intake passage 5 are smoothly connected with each other when the rotary valve is in the state shown in Fig. 3. Consequently, the flow of the intake air supplied from the first port 11 changes its direction smoothly and flows into the outlet port 13. The reinforcing member 21b protrudes from the base 21a in a radially outward direction of the rotatable valve member 2 to ensure strength of the valve portion 21, while reducing the weight of the valve portion 21. Three of the reinforcing members 21 b, 21 b, 21 b are provided in the embodiment, however, the number of the reinforcing members 21b may be appropriately decided. Because the reinforcing members 21b, 21b, 21b are structured to be out of contact with the casing 1, a friction resistance generated between the rotatable valve member 2 and the casing 1 by the rotation of the rotatable valve member 2 is reduced.

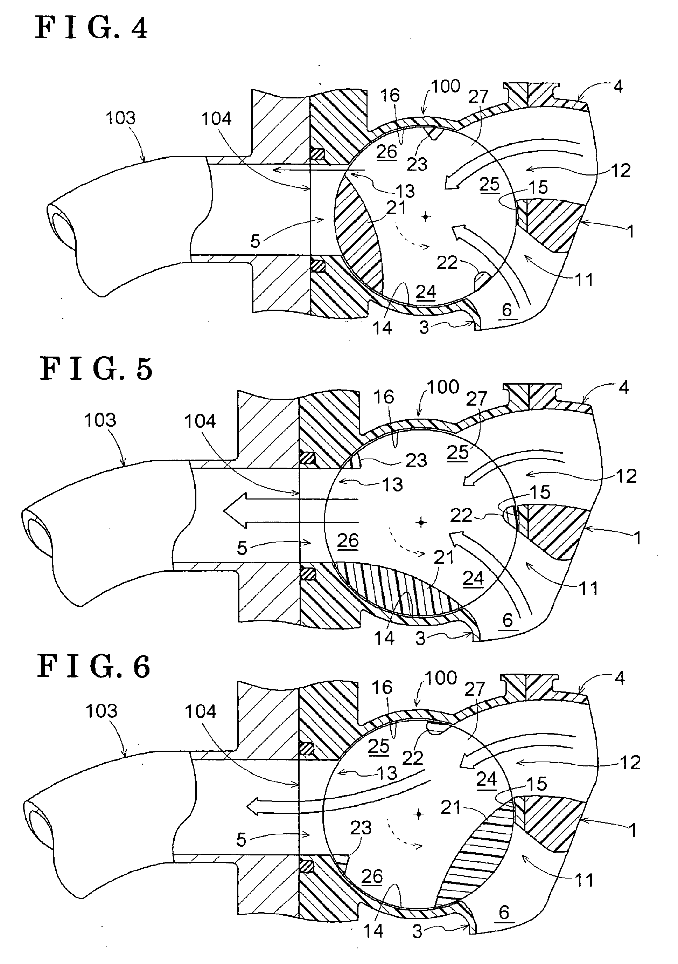

Positions and shapes of the first rib 22 and the second rib 23 are set so that the first air flow portion 24 and an inner surface of the first intake passage 3 are smoothly connected, the third air flow portion 26 and an inner surface of the third intake passage 5 are smoothly connected, and the second port 12 is fully opened to the second air flow portion 25 when the rotary valve is in the state shown in Fig. 3. The positions and the shapes of the first rib 22 and the second rib 23 are set so that the first air flow portion 24 and an inner surface of the second intake passage 4 are smoothly connected, the second air flow portion 25 and the inner surface of the third intake passage 5 are smoothly connected when the rotary valve is in the state shown in Fig. 6. The valve portion 21 is structured so as to throttle the outlet port 13 by closing a part of the outlet port 13 which is close to the second port 11 as shown in Fig. 4, and so as to close only the first port 11 as shown in Fig. 6.

Each position of the valve portion 21 shown in Figs. 4, 5 and 6 is referred to as a first position, a third position and a second position, respectively. A state in which the valve portion 21 is in the first position is refereed to as a first state and a state in which the valve portion 21 is in the second position or the third position is referred to as a second state.

As shown in Fig. 3, a length of a circular arc of an outer surface of the valve portion 21 is substantially equal to a length of a circular arc of the first inner circumferential wall 14. The first rib 22 has a substantially triangular cross-section and a length of a circular arc of an outer surface of the first rib 22 is substantially equal to a length of a circular arc of the second inner circumferential wall 15. The two sides of the substantial triangle, each of which is adjacent to the outer surface of the first rib 22, are smoothly curved. The second rib 23 also has a substantially triangular cross-section and the two sides of the substantial triangle, each of which is adjacent to the outer surface of the second rib 23, are smoothly curved.

Consequently, when the rotary valve is in the state shown in Fig. 5, the intake air supplied from the first port 11 and the intake air supplied from the second port 12 merge with each other smoothly, and then flow into the third intake passage 5 via the outlet port 13 smoothly.

Because the valve portion 21, the first rib 22 and the second rib 23 are arranged in a well-balanced manner as described above, thermal expansion of the valve portion 21 is balanced out by thermal expansion of the first rib 22 and the second rib 23, and thus the deformation of the rotatable valve member 2 otherwise caused by disproportionate thermal expansion is reduced.

The valve portion 21, the first rib 22, the second rib 23, and the partitions 27, 27 may be integrally made of high-strength, high-heat resistant resin. This will further reduce the weight of the rotatable valve member 2 and improve the rigidity around the rotation axis. In addition, the rotatable valve member 2 may be made in one piece in an injection molding process, which gives more ease and accuracy to manufacturing of the rotatable valve member 2. For the same reason, the four units and the connecting portions 28, 28, 28 may be integrally formed.

An operation of the intake system 100 having the above-stated structure will be explained. As shown in Fig. 4, when the engine is idling, the rotatable valve member 2 is driven by the actuator 7 to rotate so that the valve portion 21 is positioned in the first position. At this time, the first port 11 is opened to the first air flow portion 24 and to the second air flow portion 25, the second port 12 is opened to the second air flow portion 25, and the part of the outlet port 13 is opened to a part of the third air flow portion 26. When the engine is idling, a flow rate of the intake air flowing into the surge tank 6 is slow, however, the flow rate of the intake air supplied from the first port 11 and the second port 12 is increased because the outlet port 13 is partially throttled, and thus fuel atomization is promoted. Consequently, a combustion efficiency of the combustion engine is improved. In this state, the first rib 22 is partially closing the first port 11, which however poses no problem because a small amount of intake air is required when the engine is idling. Foreign materials including carbon or other materials may adhere to and around the valve portion 21 and the outlet port 13 while the outlet port 13 is partially throttled, however, the foreign materials are removed by a movement of the valve portion 21, and thus no clogging occurs on the intake path. Consequently, an ideal control on the intake air is maintained.

Further, the intake air supplied from the first port 11 and the second port 12 reaches the combustion chamber of the combustion engine, maintaining a high flow rate because the outlet port 13 is partially throttled as described above. The intake air introduced to the combustion chamber forms a tumble flow, thereby increasing an air-fuel ratio.

At the low engine speed, the rotatable valve member 2 is driven by the actuator 7 to rotate counterclockwise, that is, in a direction of an order of an arrangement of the outlet port 13, the first port 11 and the second port 12, so that the valve portion 21 is positioned in the third position as shown in Fig. 5. At this time, a position of the first rib 22 matches that of the second inner circumferential wall 15, and the second rib 23 faces the third inner circumferential wall 16, and thus the first port 11 is opened to the first air flow portion 24, the second port 12 is opened to the second air flow portion 25, and the outlet port 13 is opened to the third air flow portion 26. That is, the first port 11, the second port 12 and the third port 13 are all open. At the low engine speed, the small amount of intake air is required and a movement speed of the piston 101 is slow, and thus an intake efficiency is relatively high. Therefore, by opening the first port 11 and the second port 12, the charging efficiency of the intake air is improved thereby improving engine output

At the medium engine speed, the rotatable valve member 2 is driven by the actuator 7 to further rotate counterclockwise so that the valve portion 21 is in the second position as shown in Fig. 6. At this time, the first rib 22 faces the third inner circumferential wall 16 and the second rib 23 faces the first inner circumferential wall 14, and thus the second port 12 is opened to the first air flow portion 24 and the outlet port is opened to the third air flow portion 25. That is, the intake air is supplied only from the second intake passage 4, and thus the charging efficiency of the intake air is enhanced, thereby improving the engine output.

At the high engine speed, the rotatable valve member 2 is driven by the actuator 7 to rotate clockwise so that the valve portion 21 is in the third position as shown in Fig. 5. At this time, the first port 11, the second port 12 and the third port 13 are all open. The intake air is supplied mainly from the first intake passage 3, where pressure loss and line resistance are low, and supplementarily from the second intake passage 4, and thus the inertia supercharging effect is enhanced, thereby improving the engine output.

In the course of decreasing the engine speed, the intake system 100 is controlled in a reverse sequence to the above-described sequence.

According to the above-described structure, the ideal control that meets the running condition of the internal combustion engine is achieved by one rotary valve, which allows reduction in size of the intake system 100, that is, a required space for installation of the intake system 100. Further, the reduction in weight of the intake system 100 is achieved. Still further, the intake system 100 performing the ideal control is provided at a low cost.

In addition, according to the above-described structure, the valve portion 21 moves between the first position and the second position without passing through a position where the second port 4 would be closed by the valve portion 21. The ideal control is achieved with the minimum movement of the valve portion 21. This reduces a rotation range of the rotatable member 2 of the rotary valve, thereby reducing wear of the rotary valve and other components as well as degradation of the actuator 7 during service. As a result, operational reliability of the intake system 100 is also improved.

Further, the outlet port 13 is always open, which prevents an inconvenience state where the amount of intake air flowing into the combustion chamber drops to zero from occurring. Still further, as the engine speed increases from the medium range to the high range, the intake path moves from the second intake passage 4 to the first intake passage 3 having the smaller line resistance. That is, the intake air is supplied mainly from the first intake passage 3. This increases the amount of intake air, thereby improving the engine output.

According to the embodiment, a length of the first intake passage 3 may be adjusted to correspond to the engine output by changing the length of a portion of the first intake passage 3 which belongs to the surge tank 6. This allows more a design flexibility.

According to the embodiment, the valve portion 21 is controlled to be in the third position at the low engine speed, however, it is not limited to the above-described control. As described previously, at the low engine speed, the small amount of intake air is required and the movement speed of the piston 101 is slow, and thus the intake efficiency is relatively high. Therefore, for example, the valve portion 21 may be controlled to be in the second position like at the medium engine speed, in which the intake air is supplied only from the second intake passage 4 having the longer length without problems. Also in this case, an appropriate control is performed with the minimum movement of the valve portion 21 of the rotatable valve member 2.

The arrangements of the first intake passage 3, the second intake passage 4 and the third intake passage 5, and the first port 11, the second port 12 and the third port 13 are not limited to those described in the embodiment The ideal control is achieved in any other arrangements as long as the first state in which the valve portion 21 opens at least one of the first port 11 and the second port 12, and throttles the outlet port 13, and the second state in which the valve portion 21 opens the outlet port 13, and at least one of the first port 11 and the second port 12 are provided.

Further, the intake system 100 is integrally formed with the surge tank 6 according to the embodiment, however, the intake system 100 and the surge tank 6 may be formed separately from each other.

According to the embodiment, the appropriate control on the intake air is provided according to the running conditions of the internal combustion, and thus the combustion efficiency and the engine output are improved efficiently and reliably. Therefore, the intake system according to the embodiment may be used as an intake system for an internal combustion of, for example, a vehicle.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An intake system for an internal combustion engine, comprising:
a rotary valve including a casing (1) having a hollow shape and provided with a first port (11), a second port (12) and an outlet port (13), and a rotatable valve member (2) having a valve portion (21) and accommodated in the casing (1) for being rotated in the casing (1) by an actuator (7);
a first intake passage (3) fluidically connecting a surge tank (6) and the first port (11),
a second intake passage (4) fluidically connecting the surge tank (6) and the second port (12) and being longer than the first intake passage (3); and
a third intake passage (5) fluidically connecting a cylinder of the combustion engine and the outlet port (13),
wherein the rotatable valve member (2) is rotated so that a first state in which the valve portion (21) throttles the outlet port (13) and opens at least one of the first port (11) and the second port (12), or a second state in which the valve portion (21) opens the outlet port (13), and at least one of the first port (11) and the second port (12), is selectively established.

2. The intake system for the internal combustion engine according to Claim 1, wherein the rotatable valve member (2) is rotated so that the valve portion (21) moves from a first position of the first state to a second position of the second state in a direction of an order of an arrangement of the outlet port (13), the first port (11) and the second port (12), the first position is a position in which the valve portion (21) opens a part of the outlet port (13) which is close to the second port (12) and closes the remaining part of the outlet port (13) which is close to the first port (11), and the second position is a position in which the valve portion (21) closes only the first port (11).

3. The intake system for the internal combustion engine according to Claim 2, wherein the rotatable valve member (2) is rotated so that the valve portion (21) is in a third position of the second state, the third position is a position in which the valve portion (21) opens the first port (11), the second port (12) and the outlet port (13), and the third position is located between the first position and the second position.

4. The intake system for the internal combustion engine according to any one of claims 1 to 3,
wherein the rotatable valve member (2) includes at least one rib (22, 23) facing the valve portion (21).

5. The intake system for the internal combustion engine according to any one of claims 1 to 3,
wherein the casing (1) is provided with a first inner circumferential wall (14) between the first port (11) and the outlet port (13), a second inner circumferential wall (15) between the first port (11) and the second port (12) and a third inner circumferential wall (16) between the second port (12) and the outlet port (13), and the rotatable valve member (2) includes a first rib (22) and a second rib (23) each facing the valve portion (21), so that the first rib (22) is positioned in the first port (11) and the second rib (23) is positioned to face the third inner circumferential wall (16) in the first state, and the first rib (22) is positioned to face the second inner circumferential wall (15) or the third inner circumferential wall (16) and the second rib (23) is positioned to face the third inner circumferential wall (16) or the first inner circumferential wall (14) in the second state.

6. The intake system for the internal combustion engine according to any one of claims 1 to 5,
wherein the valve portion (21) includes a base (21a) along which intake air flows from at least one of the first port (11) and the second port (12) to the outlet port (13), and a reinforcing member (21 b) protruding from the base (21 a) in a radially outward direction of the rotatable valve member (2) and being out of contact with the casing (1).
